# EUROPÄISCHE PATENTSCHRIFT

(11) **EP 4 074 484 B1**
(45) Veröffentlichungstag und Bekanntmachung des Hinweises auf die Patenterteilung: **08.03.2023**
(21) Anmeldenummer: 22161781.4
(22) Anmeldetag: 14.03.2022
(51) Int. Cl.: B29C 33/48, B29C 33/50, B29C 45/26, B29C 45/44

(54) **EINSATZ, WERKZEUG, ANLAGE UND VERFAHREN ZUR HERSTELLUNG VON FORMBAUTEILEN MIT HINTERSCHNITT**
INSERT, TOOL, INSTALLATION AND METHOD FOR MANUFACTURING MOULDINGS WITH UNDERCUT
UTILISATION, OUTIL, INSTALLATION ET PROCÉDÉ DE FABRICATION DE COMPOSANTS MOULÉS À CONTRE-DÉPOUILLE

(30) Priorität: 16.04.2021 DE 102021109601
(43) Veröffentlichungstag der Anmeldung: 19.10.2022
(73) Patentinhaber: MD Elektronik GmbH, 84478 Waldkraiburg (DE)
(72) Erfinder: Andert, Alexander, 84478 Waldkraiburg (DE)

(56) Entgegenhaltungen:
- JP-A- H03 286 821
- US-A- 4 044 092
- US-A- 5 080 576

## Beschreibung

### Technisches Gebiet

Die Erfindung betrifft einen Einsatz, ein Werkzeug, eine Anlage sowie ein Verfahren zur Herstellung von Formbauteilen mit Hinterschnitt, insbesondere von Formbauteilen im Millimeterbereich.

### Stand der Technik

Spritzgusswerkzeuge und Spritzgussanlagen werden insbesondere zur Herstellung von Formbauteilen aus Kunststoff verwendet. Die zunehmende Miniaturisierung erfordert dabei auch Formbauteile, die trotz ihrer geringen Größe Hinterschnitte aufweisen. Ein Hinterschnitt kann verwendet werden, um ein Formbauteil mit anderen Bauteilen mechanisch zu verbinden, zum Beispiel durch Verrasten.

Zum Erzeugen von Hinterschnitten oder Gewinden werden in Spritzgussverfahren häufig Faltkerne oder Kernzüge eingesetzt. Sowohl Faltkerne als auch Kernzüge können ihren Umfang, zumindest in Teilbereichen, verändern. Ein Faltkern ist ein geteilter Kern in einer Spritzgussanlage, bei dem ein mittlerer Kern konisch aufgebaut ist und dieser durch eine axiale Bewegung äußere Teile des Kerns nach Innen ziehen oder nach außen drücken kann. Bei einem Kernzug werden axiale oder radiale Bewegungen genutzt, um Segmente des Kernzugs zu bewegen, so dass ein Hinterschnitt oder ein Gewinde erzeugt werden kann.

Die Druckschrift DE 10 2011 011 784 A1 betrifft einen Einfallkern als Teil eines Werkzeugs für das Kunststoffspritzen, insbesondere für ein Werkzeug zum Spritzen von Gegenständen mit Hinterschnitten. Der Einfallkern weist zumindest drei Hauptsegmente und drei Zwischensegmente auf.

Die Druckschrift DE 10 2012 208 563 A1 betrifft einen Einfallkern als Teil eines Werkzeugs zur Herstellung von spritzgegossenen oder druckgegossenen Werkstücken. Die Erfindung wird an einer Ausführungsform beschrieben, bei der um den Kern herum mindestens drei Außensegmente angeordnet sind, die am Werkzeug so gelagert sind, dass sie sich nur radial verschieben lassen. Zwischen zwei benachbarten Außensegmenten ist ein Innensegment angeordnet, das sich ebenfalls nur radial verschieben lässt.

Die US 4 044 092 A, US 5 080 576 A und JP H03 286821 A offenbaren weitere Beispiele für Einsätze zur Herstellung von Formbauteilen mit Hinterschnitt.

Auf Grund ihres Aufbaus und ihrer Funktion benötigen Faltkerne und Kernzüge viele separate Segmente. Durch die große Anzahl an Segmenten weisen beide Systeme einen signifikanten Durchmesser und eine beachtliche Länge auf. Der kleinste Durchmesser eines Hohlraums oder einer Öffnung in einem Formbauteil, das mit Hilfe dieser Systeme erzeugt werden kann, liegt bei ca. 12 mm. Eine weitere Reduzierung ist nicht möglich, da die Segmente nicht weiter reduziert werden können ohne die Faltkern- bzw. Kernzugfunktion zu beeinträchtigen. Somit sind die genannten Systeme für die Herstellung von kleinen Formbauteilen, d.h. Formbauteilen mit einem Innendurchmesser von weniger als 12 mm, die zumindest einen Hinterschnitt aufweisen, nicht geeignet.

### Beschreibung der Erfindung

Es ist daher eine Aufgabe der vorliegenden Erfindung einfache Vorrichtungen und ein einfaches Verfahren bereit zu stellen, mit denen kleine Formbauteile mit Hinterschnitt hergestellt werden können.

Die Aufgabe wird durch einen Einsatz nach Anspruch 1, einem Werkzeug nach Anspruch 10 einer Anlage nach Anspruch 11 sowie einem Verfahren zum Herstellen von Formbauteilen mit Hinterschnitt nach Anspruch 12 gelöst. Weitere vorteilhafte Ausgestaltungsformen der Erfindung lassen sich den Unteransprüchen, der Beschreibung sowie den Zeichnungen entnehmen.

Insbesondere wird die Aufgabe gelöst durch einen Einsatz für ein Werkzeug zur Herstellung von Formbauteilen mit Hinterschnitt aufweisend eine erste Komponente, eine zweite Komponente, die von der ersten Komponente beabstandet angeordnet ist, und die einen Vorsprung aufweist, der sich in Richtung der ersten Komponente erstreckt, ein

Spreizelement, das zwischen der ersten und zweiten Komponente angeordnet ist, und das bevorzugt mit der ersten Komponente bewegbar ist, und eine Öffnung an dem Spreizelement, in die der Vorsprung der zweiten Komponente eintreten kann, wobei sich der äußere Umfang des Spreizelements vergrößert und die Öffnung durch den Vorsprung geschlossen wird.

Der Einsatz ist insbesondere ein Spritzgusseinsatz für ein Spritzgusswerkzeug. Der Einsatz ermöglicht das Formen von zumindest einem Hinterschnitt in einem Formbauteil. Der Aufbau des Einsatzes ist einfach gehalten und der Einsatz kann sehr kleine Abmessungen aufweisen. Folglich können auch sehr kleine Formbauteile mit Hinterschnitt hergestellt werden. Da sich die Spreizmechanik ausschließlich am Außenumfang des Einsatzes befindet, kann der Einsatz einen festen Kern aufweisen. Der feste Kern, bevorzugt eine Achse, verleiht dem Einsatz zum einen Stabilität. Zum anderen kann der feste Kern, und auch der Einsatz, nahezu beliebig verkleinert werden, ohne die Funktionalität des Einsatzes zu beeinträchtigen. Ein fester Kern umfasst dabei bevorzugt auch einen Hohlzylinder, in dem zum Beispiel ein Vorspannelement angeordnet ist.

Bevorzugt weist die erste und/oder zweite Komponente einen maximalen Außendurchmesser auf, der kleiner als 15 mm, bevorzugt kleiner als 12 mm, noch bevorzugter kleiner als 10 mm, ist. Durch die Größe des Außendurchmessers der formgebenden Komponenten können Hohlräume bzw. Öffnungen mit ebensolchen Durchmessern innerhalb eines Formbauteils gebildet werden. Dies hat den Vorteil, dass zum Beispiel Stecker für die Kabelkonfektion sehr klein ausgelegt werden können, ohne an Funktionalität zu verlieren.

Bevorzugt wird das Spreizelement zwischen zwei radialen Vorsprüngen der ersten Komponente gehalten. Die radialen Vorsprünge können das Spreizelement beweglich halten, so dass es elastisch seine Form, insbesondere seinen Umfang, verändern kann und dennoch an einer bestimmten Position zur ersten Komponente angeordnet ist. In dem das Spreizelement zwischen den beiden radialen Vorsprüngen gehalten wird, kann es mit der ersten Komponente bewegt werden ohne an ihr befestigt zu sein. Daneben schützen die radialen Vorsprünge das Spreizelement gegenüber ungewollter mechanischer Beanspruchung, da das Spreizelement im Grundzustand bevorzugt nicht über die radialen Vorsprünge hervorsteht.

Bevorzugt weist die erste und/oder zweite Komponente eine Zylinderform auf. Eine Zylinderform ermöglicht die Herstellung von zylindrischen Hohlräumen bzw. Öffnungen in dem Formbauteil. Solch ein Formbauteil kann zum Beispiel in der Kabelkonfektion verwendet werden, um einen Stecker an einem Kabel zu befestigen.

Bevorzugt weist der Vorsprung eine Keilform auf, die sich von der zweiten Komponente weg verjüngt. Die Keilform vereinfacht das Einführen des Vorsprungs in die Öffnung am Spreizelement. Weiterhin ermöglicht die Keilform ein sukzessives Aufspreizen des Spreizelements, ohne zusätzliche Hilfsmittel.

Bevorzugt umfasst das Spreizelement einen Spreizring. Ein Spreizring ist ein einfach zu fertigendes Bauteil. Daher ist seine Beschaffung einfach und preisgünstig. Weiterhin kann ein Spreizring einfach und schnell ausgetauscht werden, wodurch sich die Wartung des Einsatzes und/oder des Werkzeugs vereinfacht.

Bevorzugt weist die Öffnung eine zum Vorsprung komplementäre Form auf, so dass die Öffnung mit eingeführtem Vorsprung geschlossen ist. Die geschlossene Öffnung hat den Effekt, dass das Spreizelement vollumfänglich geschlossen ist, und keine Formmasse in Zwischenräume eindringen kann.

Bevorzugt ist das Volumen des Vorsprungs größer, als das Volumen der Öffnung im Grundzustand. Dieser Größenunterschied hat den Effekt, dass das Spreizelement beim Einführen des Vorsprungs in die Öffnung auseinandergedrückt bzw. -gespreizt wird. Dadurch vergrößert sich der Umfang des Spreizelements. Andererseits erzeugt das Auseinanderdrücken eine entgegen gerichtete Druckkraft des Spreizelements auf den Vorsprung, so dass beide Teile dicht aneinander anliegen. Weiterhin werden zumindest die erste Komponente, das Spreizelement, und die zweite Komponente in Längsrichtung des Einsatzes, bevorzugt durch eine Schließkraft, die über Werkzeughälften eines Werkzeugs auf den Einsatz aufgebracht wird, zusammengedrückt und auf einer gewünschten Position gehalten, wodurch eine geschlossene Dichtfläche erzeugt wird. Dadurch werden Lücken verhindert, in welche Formmasse ungewollt eindringen könnte.

Bevorzugt weist die erste Komponente und das Spreizelement im Grundzustand einen geringeren Außendurchmesser auf als die zweite Komponente. Dies hat den Vorteil, dass der Einsatz mit seinem vorderen Ende einfach durch eine Bewegung in Richtung der zweiten Komponente aus dem hergestellten Formbauteil gelöst werden kann. Weiterhin ist es so möglich, zum Bespiel durch Vergrößern des Spreizelements auf den Außendurchmesser der zweiten Komponente, einen Hinterschnitt im Bereich der ersten Komponente in einem Formbauteil zu erhalten. Je größer der Außendurchmesser-Unterschied zwischen der ersten Komponente mit dem Spreizelement im Grundzustand und der zweiten Komponente ist, desto tiefer kann ein Hinterschnitt ausgestaltet sein. Insbesondere muss der Außendurchmesser des Spreizelements im gespreizten Zustand, d.h. bei vollständig eingeführtem Vorsprung, jedoch nicht dem Außendurchmesser der zweiten Komponente entsprechen.

Bevorzugt wird das Spreizelement durch Haltemittel in seiner Ausrichtung gegenüber der ersten Komponente lose gehalten. Die lose Halterung hat den Vorteil, dass das Spreizelement in einer bestimmten Position bzw. Ausrichtung zur ersten Komponente gehalten wird, aber seine Größe bzw. seinen Umfang ändern kann. Durch das Halten in einer bestimmten Position bzw. Ausrichtung wird sichergestellt, dass sich die Öffnung des Spreizelements und der Vorsprung der zweiten Komponente immer gegenüber liegen. Insbesondere bei einem Spreizring wird ein Verschieben oder Verrutschen um die X-Achse durch das Haltemittel verhindert.

Die oben genannte Aufgabe wird weiterhin insbesondere gelöst durch ein Werkzeug zur Herstellung von Formbauteilen mit Hinterschnitt aufweisend zumindest zwei Werkzeughälften, und einen Einsatz, wobei die zumindest zwei Werkzeughälften den Einsatz im geschlossenen Zustand umschließen, und zumindest einen Hohlraum bilden, so dass ein Formbauteil mit zumindest einem Hinterschnitt ausgebildet werden kann. Das Werkzeug ist insbesondere ein Spritzgusswerkzeug. Mit dem Werkzeug können insbesondere Formbauteile mit Hinterschnitt und Abmessungen im Millimeterbereich und/oder Hohlräumen bzw. Öffnungen mit Durchmessern unter 12 mm hergestellt werden.

Die oben genannte Aufgabe wird insbesondere weiterhin gelöst durch eine Anlage zur Herstellung von Formbauteilen mit Hinterschnitt aufweisend zumindest ein Werkzeug, und zumindest eine Düse, die eingerichtet ist geschmolzene Formmasse, bevorzugt unter Druck, in Hohlräume im Werkzeug einzuführen. Die Anlage ist insbesondere eine Spritzgussanlage.

Die oben genannte Aufgabe wird weiterhin insbesondere gelöst durch ein Verfahren zur Herstellung von Formbauteilen mit Hinterschnitt, bevorzugt mit einem Werkzeug und/oder einer Anlage, wobei das Verfahren die folgenden Schritte aufweist: Umschließen eines Einsatzes mit Hilfe von zumindest zwei Werkzeughälften, so dass zumindest ein Hohlraum gebildet wird, wobei durch das Umschließen der Umfang eines Spreizelements am Einsatz vergrößert und geschlossen wird, Injizieren einer Formmasse in den zumindest einen Hohlraum, Aushärten der Formmasse, so dass ein Formbauteil gebildet wird, und Öffnen der Werkzeughälften, wobei sich der Umfang des Spreizelements am Einsatz auf seine Größe im Grundzustand verkleinert.

In diesem Verfahren vergrößert oder verkleinert sich der Umfang des Spreizelements durch das Umschließen bzw. Öffnen der Werkzeughälften. Eine aktive Vergrößerung oder Verkleinerung des Spreizelements an dem Einsatz ist nicht notwendig. Dadurch kann der Einsatz sehr einfach aufgebaut sein und sehr kleine Abmessungen umfassen. Somit können in diesem Verfahren sehr kleine Formbauteile mit Hinterschnitt hergestellt werden.

Bevorzugt umfasst das Verfahren ein Spritzguss- oder Druckgussverfahren. Mit diesen Verfahren können insbesondere Formbauteile aus Kunststoff hergestellt werden. Solche Formbauteile werden, unter anderem wegen ihrer elektrisch nicht-leitfähigen Eigenschaften, als Stecker in der Kabelkonfektion verwendet.

Bevorzugt umfasst der Schritt des Umschließens die folgenden Schritte: In Kontakt bringen zumindest einer Werkzeughälfte mit einer ersten Komponente des Einsatzes, wobei das Spreizelement mit der ersten Komponente gegenüber einer zweiten Komponente bewegbar ist, auf einander zu bewegen, beim weiteren Umschließen des Einsatzes, der ersten Komponente mit dem Spreizelement und der zweiten Komponente, Einführen, beim weiteren Umschließen des Einsatzes, eines Vorsprungs an der zweiten Komponente in eine Öffnung am Spreizelement, so dass sich der Umfang des Spreizelements vergrößert und die Öffnung durch den Vorsprung geschlossen wird.

Durch das in Kontakt bringen einer Werkzeughälfte mit dem Einsatz dienen die Werkzeughälften nicht nur der äußeren Formgebung des Formbauteils, sondern bewirken außerdem die Vergrößerung bzw. Verkleinerung des Spreizelements am Einsatz. Da die Vergrößerung bzw. Verkleinerung mit Hilfe der Werkzeughälften durchgeführt wird, kann der Einsatz einfacher aufgebaut sein. Das Verfahren ist unabhängig von der Größe des herzustellenden Formbauteils verwendbar.

Bevorzugt wird im Schritt des auf einander zu Bewegens die zweite Komponente gegen eine Vorspannkraft in Richtung der ersten Komponente bewegt, und die Vorspannkraft drückt im Schritt des Öffnens der Werkzeughälften die erste Komponente von der zweiten Komponente weg. Die Bewegungs- und Druckrichtungen sind umkehrbar. Das heißt, im Schritt des auf einander zu Bewegens kann auch die erste Komponente in Richtung der zweiten Komponente, oder beide Komponenten aufeinander zu, bewegt werden. Sinngemäß gilt das auch für den Schritt des Öffnens der Werkzeughälften. Die Vorspannkraft hat den Effekt, dass der Einsatz in seinen Grundzustand, in dem der Außendurchmesser des Spreizelements am geringsten ist, zurückkehrt, sobald das Umschließen des Einsatzes, bzw. der Druck auf die Komponenten, gelöst wird. Dabei ist der Aufbau des Einsatzes einfach gehalten und auch für sehr kleine Einsätze und/oder Werkzeuge geeignet.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigt:
- Fig. 1: eine perspektivische Ansicht einer Ausführungsform eines Einsatzes;
- Fig. 2: eine Seitenansicht in Längsrichtung der Ausführungsform des Einsatzes aus Fig. 1;
- Fig. 3: eine Draufsicht auf eine Ausführungsform des Einsatzes;
- Fig. 4: eine schematische Darstellung einer Ausführungsform eines Werkzeugs mit der Ausführungsform des Einsatzes aus Fig. 3; und
- Fig. 5: die schematische Darstellung aus Fig. 4 mit injizierter Formmasse zum Bilden einer Ausführungsform eines Formbauteils mit Hinterschnitt.

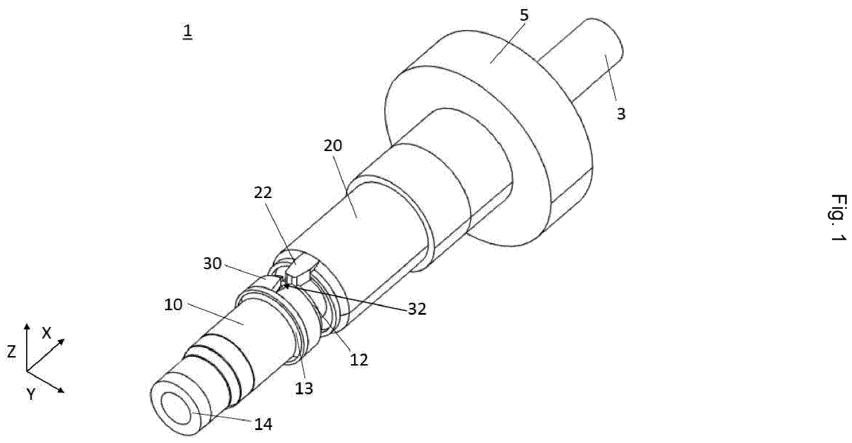

Fig. 1 zeigt eine Ausführungsform eines Einsatzes 1. Der Einsatz 1 weist eine erste und eine zweite Komponente 10, 20 auf, die bevorzugt auf einer gemeinsamen Achse 3 angeordnet sind. Entlang der Achse 3 können die erste und zweite Komponente 10, 20 aufeinander zu und voneinander weg bewegt werden. Bevorzugt ist die zweite Komponente 20 fest mit der Achse 3 verbunden, und die erste Komponente 10 ist bewegbar.

Die erste Komponente 10 ist in der dargestellten Ausführungsform als ein zylindrisches Bauteil dargestellt. Andere Formen, wie eine quaderförmige Form, sind in alternativen Ausführungsformen möglich. Der Außendurchmesser D1 der ersten Komponente 10 kann entlang der Achse 3 gleich sein, oder in verschiedenen Abschnitten unterschiedlich ausgebildet sein. Bevorzugt ist der Außendurchmesser D1 der ersten Komponente 10 an einem vorderen Ende 14, das entfernt von der zweiten Komponente 20 angeordnet ist, am kleinsten. In einer Ausführungsform kann der Außendurchmesser D1 sukzessive vom vorderen Ende 14 aus ansteigen.

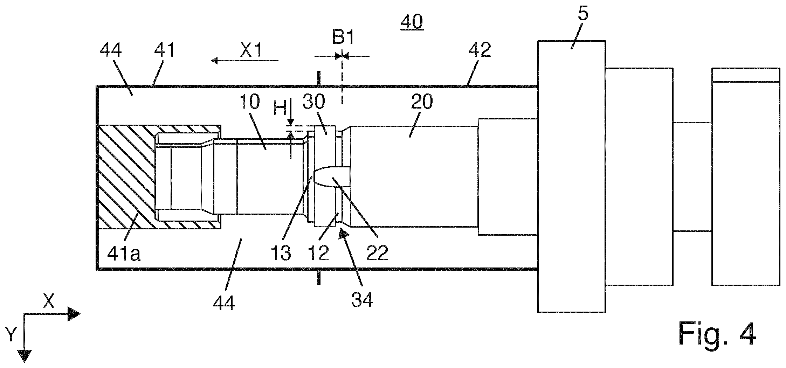

Die erste Komponente 10 weist in der dargestellten Ausführungsform weiterhin zwei - einen ersten und einen zweiten - radiale Vorsprünge 12, 13 auf. Die radialen Vorsprünge 12, 13 dienen als Halterung für ein Spreizelement 30. Damit das Spreizelement 30 in Interaktion mit der zweiten Komponente 20 kommen kann, sind die radialen Vorsprünge 12, 13 auf einer Seite der ersten Komponente 10, die der zweiten Komponente 20 zugewandt ist, angeordnet. In der dargestellten Ausführungsform erstrecken sich die radialen Vorsprünge 12, 13 radial von der Achse 3 nach außen. Die Länge, wie weit sich die radialen Vorsprünge 12, 13 radial nach außen erstrecken kann unterschiedlich sein. Die radialen Vorsprünge 12, 13 können in Umfangsrichtung auch nur abschnittsweise ausgebildet sein. Beide radialen Vorsprünge 12, 13 sind beabstandet voneinander angeordnet, so dass sie das Spreizelement 30 dazwischen aufnehmen können. Der erste radiale Vorsprung 12 kann weiterhin in direkten Kontakt mit der zweiten Komponente 20 des Einsatzes 1 gebracht werden (s. Fig. 4). Bevorzugt weist der erste radiale Vorsprung 12 eine Durchlassöffnung 12a auf, die es einem Vorsprung 22 der zweiten Komponente 20 ermöglicht, durch den ersten radialen Vorsprung 12 in eine Öffnung 32 des Spreizelements 30 zu gelangen.

Die zweite Komponente 20 weist in der in Fig. 1 dargestellten Ausführungsform eine zylindrische Form auf. In alternativen Ausführungsformen kann die zweite Komponente 20 andere Formen aufweisen, wie zum Beispiel eine quaderförmige Form. Der Zylinder kann sich insbesondere in Richtung zur ersten Komponente 10 hin auf einen Außendurchmesser D3 der ersten Komponente 10 verjüngen. Die zweite Komponente 20 kann auf der Seite, die der ersten Komponente 10 abgewandt ist, mit weiteren Komponenten verbunden sein. Insbesondere kann die zweite Komponente 20 an einer Anlagefläche 5 anliegen. Die Anlagefläche 5 kann die zweite Komponente 20 stützen, und falls die zweite Komponente 20 gegenüber der Achse 3 beweglich ist, als Stopper dienen.

Die zweite Komponente 20 weist in Längsrichtung X entlang der Achse 3, auf einer Seite, die der ersten Komponente 10 zugewandt ist, zumindest einen Vorsprung 22 auf. Der Vorsprung 22 ist bevorzugt keilförmig, und verjüngt sich in Richtung weg von der zweiten Komponente 20. Insbesondere erstreckt sich der Vorsprung 22, bevorzugt von der Achse 3, radial nach Außen bis zu einem Außendurchmesser D2 der zweiten Komponente 20. In alternativen Ausführungsformen kann sich der Vorsprung 22 auch kürzer oder weiter als der Außendurchmesser D2 der zweiten Komponente 20 radial nach außen erstrecken. In einer alternativen Ausführungsform können auch mehr als ein Vorsprung 22 an der zweiten Komponente 20 angeordnet sein. Der Vorsprung 22 weist bevorzugt eine abgeflachte Spitze auf. So kann der Vorsprung 22 in Anschlag mit einer Fläche, zum Beispiel an dem zweiten radialen Vorsprung 13 der ersten Komponente 10, gebracht werden. Die Oberfläche des Vorsprungs 22 ist bevorzugt glatt, so dass der Vorsprung 22, wenn er vollständig in die Öffnung 32 des Spreizelements 30 eingeführt wurde, die Öffnung 32 dicht abschließt.

Zwischen der ersten und der zweiten Komponente 10, 20 ist ein Spreizelement 30 angeordnet. Das Spreizelement 30 umfasst bevorzugt ein elastisches Bauteil, zum Beispiel aus Metall oder Kunststoff. Das Spreizelement 30 ist in der in den Figs. 1 bis 5 dargestellten Ausführungsform ein Spreizring. In alternativen Ausführungsformen kann das Spreizelement 30 auch andere Formen aufweisen, die unter Einführen zumindest eines Elements ihren Umfang vergrößern. Eine alternative Ausführungsform wäre ein rechteckiges Spreizelement, in das zumindest ein, bevorzugt vier, Vorsprünge eingeführt werden, so dass sich der Umfang des Spreizelements über alle vier Seiten vergrößert. In weiteren alternativen Ausführungsformen kann das Spreizelement eine Fünfkant-, Sechskant- usw. Geometrie aufweisen.

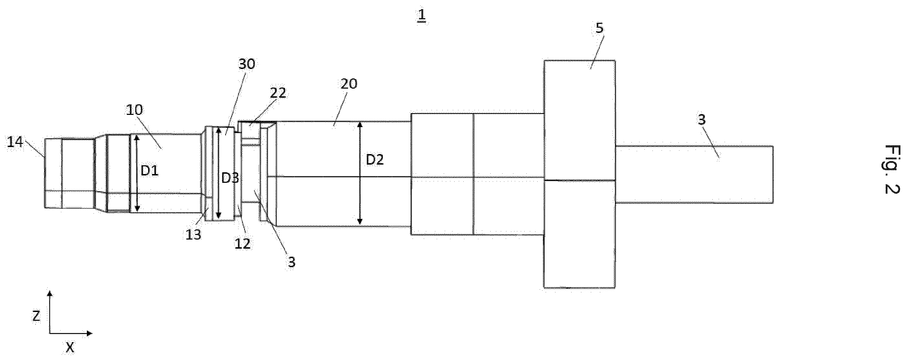

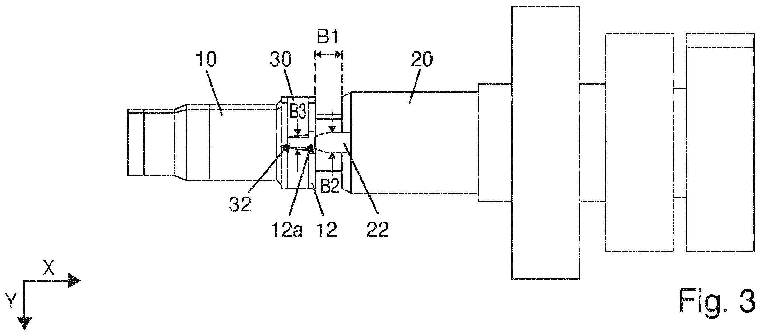

Der in den Figs. 1 bis 5 dargestellte Spreizring 30 weist zumindest eine Öffnung 32 auf. Bevorzugt durchtrennt die Öffnung 32 den Ring 30. Insbesondere weist die Öffnung 32 eine Form auf, die komplementär zur Form des Vorsprungs 22 ist. Eine komplementäre Form heißt, dass der Vorsprung 22, wenn er vollständig in die Öffnung 32 eingeführt ist, die Öffnung dicht abschließt, wobei das Volumen der Öffnung 32 im Grundzustand geringer ist, als das Volumen des Vorsprungs 22. Ist der Vorsprung 22 vollständig in die Öffnung 32 eingeführt, ist die Öffnung 32 geschlossen, und der Umfang bzw. Außendurchmesser D3 des Spreizelements 30, durch die Volumenvergrößerung aufgrund des eingeführten Vorsprungs 22, vergrößert. Bevorzugt weist die Öffnung 32 eine Breite B3 auf, die sich in einer Richtung X weg von der zweiten Komponente 20 verjüngt, d.h. verkleinert. Der Außendurchmesser D3 des Spreizelements 30 in einem Grundzustand, d.h. ohne einen eingeführten Vorsprung 22, entspricht bevorzugt einem maximalen Außendurchmesser D3 der ersten Komponente 10 an zumindest einem der radialen Vorsprünge 12, 13 (s. Fig. 2 und Fig. 3).

Das Spreizelement 30 weist weiterhin bevorzugt zumindest ein Haltemittel auf, mit dem das Spreizelement 30 gegenüber der ersten Komponente 10 auf einer Position lose gehalten werden kann. Das Spreizelement 30 sollte lose gehalten werden, damit es seine Umfangsgröße ungehindert ändern kann. Daneben sollte das Spreizelement 30 auf einer Position gehalten werden, damit sichergestellt wird, dass der Vorsprung 22 der zweiten Komponente 20 in die Öffnung 32 des Spreizelements 30 eindringen kann. In einer Ausführungsform weist das Haltemittel einen Vorsprung an der Innerseite des Spreizelements 30 auf. Der Vorsprung kann in eine entsprechende Vertiefung an der ersten Komponente 10 eingeführt werden bzw. mit ihr in Eingriff gebracht werden, und hält dadurch das Spreizelement 30 lose auf Position. Bei einer Änderung des Umfangs des Spreizelements 30, kann der Vorsprung des Haltemittels radial seine Eingriffstiefe mit der entsprechenden Vertiefung an der ersten Komponente 10 variieren und gleichzeitig die vorbestimmte Position halten. In einer bevorzugten Ausführungsform weist das Haltemittel einen keilförmigen Vorsprung an der Innenseite des Spreizrings 30 auf, der in eine entsprechende keilförmige Vertiefung in der ersten Komponente 10 gebracht wird. In alternativen Ausführungsformen sind andere Ausgestaltungen des Haltemittels möglich. So können alternativ andere Formen eines Vorsprungs und/oder einer Vertiefung verwendet werden, zum Bespiel abgerundete Formen und/oder mehrere Vorsprünge und Vertiefungen, oder die Vertiefung wird auf dem Spreizelement 30 und der Vorsprung an der ersten Komponente 10 angeordnet.

Fig. 3 zeigt eine Ausführungsform des Einsatzes 1 in einer Draufsicht, in der der Vorsprung 22 und die Öffnung 32 deutlich zu erkennen sind. Der Einsatz 1 befindet sich im Grundzustand, d.h. der Vorsprung 22 befindet sich außerhalb der Öffnung 32. Bevorzugt bewirkt ein Vorspannelement, wie zum Beispiel eine Feder, die Anordnung des Einsatzes 1 im Grundzustand. Weiterhin bevorzugt befindet sich die Spitze des Vorsprungs 22 in unmittelbarer Nähe zur Öffnung 12a am ersten radialen Vorsprung 12. Dadurch wird beim Verschieben der ersten Komponente 10 um eine Länge B1 in Richtung X zur zweiten Komponente 20 der Vorsprung 22 vollständig in die Öffnung 32 eingeführt. Dasselbe gilt beim Verschieben der zweiten Komponente 20 in umgekehrter Richtung.

Die Breite B3 der Öffnung 32 variiert bevorzugt entlang der Längsachse X. Der Verlauf der Breite B3 entspricht dabei bevorzugt dem Verlauf der Breite B2 des Vorsprungs 22. Dadurch liegt der Vorsprung 22 dicht in der Öffnung 32. Insbesondere ist das Volumen des Vorsprungs 22 größer als das Volumen der Öffnung 32 im Grundzustand. Beim Einführen des Vorsprungs 22 in die Öffnung 32, wird das Abstandsvolumen zwischen den gegenüberliegenden Oberflächen des Spreizelements 30 an der Öffnung 32, auf das Volumen des Vorsprungs 22 vergrößert. Gleichzeitig wird die Öffnung 32 durch den Vorsprung 22 geschlossen. Dadurch kann der Umfang des Spreizelements 30 von einem kleineren Umfang im Grundzustand, auf einen Größeren im gespreizten Zustand vergrößert werden. Die Größe der Umfangsänderung H kann vorbestimmt werden, zum Beispiel durch die Breite B3 der Öffnung im Grundzustand und/oder der Breite B2 des Vorsprungs 22. Die Umfangsänderung H bestimmt die Tiefe eines Hinterschnitts 52 in einem herstellbaren Formbauteil 50. Die Tiefe des Hinterschnitts 52 kann durch weitere Strukturen beeinflusst werden.

Fig. 4 zeigt schematisch eine Ausführungsform eines Werkzeugs 40 ohne eingefüllte Formmasse. In dem Werkzeug 40 sind die zumindest zwei Werkzeughälften 41, 42 geschlossen. Die erste Werkzeughälfte 41 ist bevorzugt auf einer Düsenseite des Werkzeugs 40 angeordnet, an der zumindest eine Düse zum Einführen von geschmolzener Formmasse in das Werkzeug 40 angeordnet werden kann. Die zweite Werkzeughälfte 42 ist bevorzugt auf einer Auswerferseite des Werkzeugs 40 angeordnet, an der Auswerfer zum Entformen bzw. Auswerfen eines Formbauteils 50 angeordnet sein können. In anderen Ausführungsformen kann die Anordnung der Werkzeughälften 41, 42 auch verschieden sein. Bevorzugt ist der Einsatz 1 an der zweiten Werkzeughälfte 42 bzw. auf der Auswerferseite angeordnet. In alternativen Ausführungsformen kann der Einsatz 1 an der ersten Werkezughälfte 41 bzw. auf der Düsenseite angeordnet sein oder der Einsatz 1 besteht aus Teilstücken, die teilweise auf der Auswerfer- und teilweise auf der Düsenseite angeordnet sind und die beim Umschließen des Einsatzes 1 durch die Werkezughälften 41, 42 zusammengeführt werden. Die erste Werkzeughälfte 41 weist insbesondere ein Zusatzbauteil 41a zur inneren Formgebung des herstellbaren Formbauteils 50 auf. Das Zusatzbauteil 41a kann beliebige Formen aufweisen. In einer alternativen Ausführungsform befindet sich die erste Werkzeughälfte 41 direkt in Anschlag mit dem Einsatz 1, insbesondere mit der ersten Komponente 10 des Einsatzes 1.

In Fig. 4 befindet sich das Spreizelement 30 im gespreizten Zustand. Der Übergang des Spreizelements 30 vom Grundzustand in den gespreizten Zustand wird wie folgt beschrieben: Beim Schließen der zumindest zwei Werkzeughälften 41, 42 bewegt sich der Einsatz 1 in Richtung X1 zur ersten Werkzeughälfte 41, 41a. Die Bewegung in Richtung X1 erfolgt, bevorzugt durch die zweite Werkzeughälfte 42, zumindest solange, bis der Einsatz 1, insbesondere mit seinem vorderen Ende 14, in Anschlag mit der ersten Werkzeughälfte 41, 41a ist. Dann bewegt sich der Einsatz 1, und insbesondere die zweite Werkzeughälfte 42, weiter in Richtung X1, wobei sich die zweite Komponente 20, bevorzugt entgegen einer Vorspannkraft, in Richtung der ersten Komponente 10 drückt. Die Vorspannkraft wird bevorzugt durch eine Feder oder ein vergleichbares Bauteil realisiert. Bei der Weiterbewegung schiebt sich der Vorsprung 22 in Richtung X1 in die Öffnung 32 des Spreizelements 30, und vergrößerte den Umfang des Spreizelements 30. Gleichzeitig schließt der Vorsprung 22 die Öffnung 32 ab. In dem in Fig. 4 dargestellten vollständig gespreizten Zustand entspricht der Außendurchmesser D3 des Spreizelements 30 dem Außendurchmesser D2 der zweiten Komponente 20. Das Spreizelement 30 ragt dabei radial über den ersten und zweiten radialen Vorsprung 12, 13 hinaus. Dadurch ergibt sich zumindest im Bereich des ersten radialen Vorsprungs 12 eine Einkerbung 34 zwischen dem Spreizelement 30 und der zweiten Komponente 20. In alternativen Ausführungsformen kann sich die zweite Komponente 20 über den ersten radialen Vorsprung 12 schieben und durch eine Abschrägung an ihrem äußeren Umfang eine Einkerbung 34 bilden. Die Einkerbung 34 erstreckt sich bevorzugt in Umfangsrichtung über zumindest 50 %, bevorzugter über zumindest 75 % des Umfangs. Je länger sich die Einkerbung 34 in Umfangsrichtung erstreckt, desto größer ist eine radiale Hinterschnittfläche. Entlang der X-Achse liegt der Vorsprung 22 mit seinem freien Ende an dem zweiten radialen Vorsprung 13 an, wobei der zweite radiale Vorsprung 13 als Anschlag dient. Die Öffnung 32 ist vollständig geschlossen, so dass keine Formmasse hineingelangt. Insbesondere erzeugt die zweite Werkzeughälfte 42 eine Druckkraft auf den Einsatz 1 in Richtung X1, so dass eine Stirnfläche der zweiten Komponente 20 gegen das Spreizelement 30 drückt und eine Vorspannung erzeugt. Aufgrund der Vorspannung wird verhindert, dass Schmelze ungewollt in Zwischenräume eindringt.

In einer alternativen Ausführungsform kann das Spreizelement 30 zumindest abschnittsweise in Umfangsrichtung, auf einer Seite, die der zweiten Komponente 20 zugewandt ist, eine Phase oder Aussparung aufweisen. In diese Phase oder Aussparung kann zumindest eine komplementäre Phase oder Vorsprung eingreifen, die an der zweiten Komponente 20 angeordnet ist, wenn sich die Stirnseite der zweiten Komponente 20 im Anschlag mit dem Spreizelement 30 befindet. Insbesondere ist dies möglich, wenn sich die zweite Komponente 20 über den ersten radialen Vorsprung 12 schiebt. Bevorzugt sind die zueinander komplementären Phasen keilförmig ausgebildet. Insbesondere wird dabei der Bereich des Spreizelements 30, welcher der Öffnung 32 gegenüberliegt, radial ausgedehnt. Beim Eingreifen unterstützen die komplementären Phasen das Ausrichten des Spreizelements 30 in der gewünschten, insbesondere kreisförmigen bzw. runden, Form.

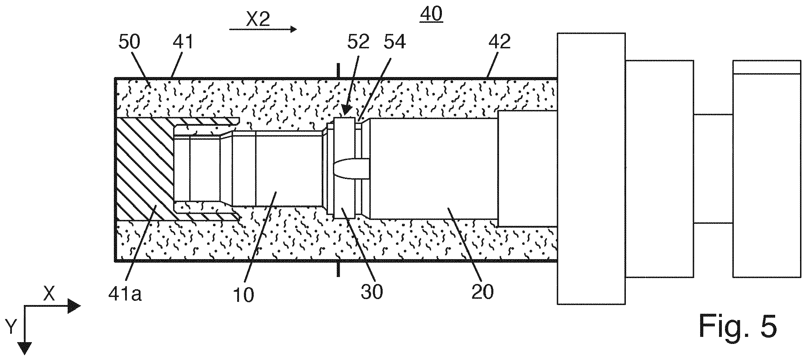

In Fig. 5 ist gezeigt, wie Formmasse, insbesondere heiße Schmelze, in den zumindest einen Hohlraum 44 des Werkzeugs 40 eingebracht ist. Die zumindest zwei Werkzeughälften 41, 42 umschließen den Einsatz 1 dabei vollständig. Das Einbringen der Formmasse kann durch einen Spritzvorgang oder einen Druckspritzvorgang erfolgen. Nachdem die Formmasse in dem Werkzeug 40 ausgehärtet ist, öffnen sich die zumindest zwei Werkzeughälften 41, 42, damit das Formbauteil 50 entnommen werden kann. An dem Formbauteil 50 bildet insbesondere die Einkerbung 34 einen inneren Vorsprung 54, so dass der Einsatz 1 mit dem Spreizelement 30 im gespreizten Zustand nicht aus den zumindest zwei Werkzeughälften 41, 42 gelöst werden kann. Um den Einsatz 1 aus dem Formbauteil 50 zu lösen, muss das Spreizelement 30 vom gespreizten Zustand in den Grundzustand übergehen. Der Übergang vom gespreizten Zustand in den Grundzustand wird wie folgt beschrieben: Beim Öffnen der zumindest zwei Werkzeughälften 41, 42 bewegt sich, bevorzugt aufgrund der Vorspannung, die erste Komponente 10 zusammen mit dem ersten Formsegment 41 in Richtung X1. Dabei entfernt sich das Spreizelement 30 vom Vorsprung 22, und der Vorsprung 22 entfernt sich aus der Öffnung 32. Das Spreizelement 30 gelangt vom gespreizten Zustand in seinen Grundzustand, wobei sich der Umfang bzw. Außendurchmesser D3 des Spreizelements 30 reduziert. Wenn sich das Spreizelement 30 im Grundzustand befindet, stoßen das Spreizelement 30 und der innere Vorsprung 54 bei einer Bewegung entlang der X-Achse nicht aneinander. Der Einsatz 1 bewegt sich dann in Richtung X2 aus dem Formbauteil 50 heraus. Dies kann durch einen Auswerfer unterstützt werden.

Das hergestellte Formbauteil 50 ist bevorzugt aus Kunststoff gefertigt. Insbesondere wird das Formbauteil 50 als Stecker für elektrische Leitungen in der Kabelkonfektion verwendet. Das Formbauteil 50 weist insbesondere eine geringe Größe, d.h. im Millimeterbereich, auf. Die äußeren Abmessungen des Formbauteils 50 bzw. der Außendurchmesser einer Einhüllenden beträgt bevorzugt weniger als 20 mm, bevorzugter weniger als 15 mm, noch bevorzugter weniger als 10 mm. Der innere Durchmesser eines Hohlraums mit Hinterschnitt in dem Formbauteil 50 beträgt bevorzugt weniger als 12 mm. Die Tiefe des mindestens einen Hinterschnitts beträgt bevorzug weniger als 15 %, bevorzugter weniger als 10 %, noch bevorzugter weniger als 5 % des Durchmessers des Spreizelements im Grundzustand. Insbesondere kann über eine Differenz H, um die sich der Außendurchmesser des Spreizelements 30 im gespreizten Zustand gegenüber dem Grundzustand erhöht, die Tiefe eines Hinterschnitts eingestellt werden. Bevorzugt umfasst der Einsatz 1 mehrere Spreizelemente 30, die insbesondere nacheinander oder parallel in einen gespreizten Zustand gebracht werden können, so dass ein Formbauteil 50 mit mehreren Hinterschnitten 52 herstellt werden kann.

### BEZUGSZEICHENLISTE

- 1: Einsatz
- 3: Achse
- 5: Anlagefläche
- 10: erste Komponente
- 12: erster radialer Vorsprung
- 13: zweiter radialer Vorsprung
- 14: vorderes Ende
- 20: zweite Komponente
- 22: Vorsprung
- 30: Spreizelement
- 32: Öffnung
- 34: Einkerbung
- 40: Werkzeug
- 41: erste Werkzeughälfte
- 41a: Zusatzbauteil
- 42: zweite Werkzeughälfte
- 44: Hohlraum
- 50: Formbauteil
- 52: Hinterschnitt
- 54: innerer Vorsprung

## Patentansprüche

1. Einsatz (1) für ein Werkzeug (40) zur Herstellung von Formbauteilen (50) mit Hinterschnitt (52) aufweisend:
eine erste Komponente (10);
eine zweite Komponente (20), die von der ersten Komponente (10) beabstandet angeordnet ist, und die einen Vorsprung (22) aufweist, der sich in Richtung der ersten Komponente (10) erstreckt;
ein Spreizelement (30), das zwischen der ersten und zweiten Komponente (10, 20) angeordnet ist, und das bevorzugt mit der ersten Komponente (10) bewegbar ist; und
eine Öffnung (32) an dem Spreizelement (30), in die der Vorsprung (22) der zweiten Komponente (20) eintreten kann, wobei sich der äußere Umfang des Spreizelements (30) vergrößert und die Öffnung (32) durch den Vorsprung (22) geschlossen wird.

2. Einsatz nach Anspruch 1, bei dem die erste und/oder zweite Komponente (10, 20) einen maximalen Außendurchmesser aufweist, der kleiner als 15 mm, bevorzugt kleiner als 12 mm, noch bevorzugter kleiner als 10 mm, ist.

3. Einsatz nach Anspruch 1 oder 2, bei dem das Spreizelement (30) zwischen zwei radialen Vorsprüngen (12, 13) der ersten Komponente (10) gehalten wird.

4. Einsatz nach einem der Ansprüche 1 - 3, bei dem die erste und/oder zweite Komponente (10, 20) eine Zylinderform aufweist.

5. Einsatz nach einem der Ansprüche 1 - 4, bei dem der Vorsprung (22) eine Keilform aufweist, die sich von der zweiten Komponente (20) weg verjüngt.

6. Einsatz nach einem der Ansprüche 1 - 5, bei dem das Spreizelement (30) einen Spreizring umfasst.

7. Einsatz nach einem der Ansprüche 1 - 6, bei dem die Öffnung (32) eine zum Vorsprung (22) komplementäre Form aufweist, so dass die Öffnung (32) mit eingeführtem Vorsprung (22) geschlossen ist.

8. Einsatz nach einem der Ansprüche 1 - 7, bei dem das Volumen des Vorsprungs (22) größer ist, als das Volumen der Öffnung (32) im Grundzustand.

9. Einsatz nach einem der Ansprüche 1 - 8, bei dem das Spreizelement (30) durch Haltemittel in seiner Ausrichtung gegenüber der ersten Komponente (10) lose gehalten wird.

10. Werkzeug (40) zur Herstellung von Formbauteilen (50) mit Hinterschnitt (52) aufweisend:
zumindest zwei Werkzeughälften (41, 42); und
einen Einsatz (1) nach einem der Ansprüche 1 - 9; wobei
die zumindest zwei Werkzeughälften (41, 42) den Einsatz (1) im geschlossenen Zustand umschließen, und zumindest einen Hohlraum (44) bilden, so dass ein Formbauteil (50) mit zumindest einem Hinterschnitt (52) ausgebildet werden kann.

11. Anlage zur Herstellung von Formbauteilen (50) mit Hinterschnitt (52) aufweisend:
zumindest ein Werkzeug (40) nach Anspruch 10; und
zumindest eine Düse, die eingerichtet ist geschmolzene Formmasse, bevorzugt unter Druck, in Hohlräume (44) im Werkzeug (40) einzuführen.

12. Verfahren zur Herstellung von Formbauteilen (50) mit Hinterschnitt (52), bevorzugt mit einem Werkzeug (40) nach Anspruch 10 und/oder einer Anlage nach Anspruch 11, wobei das Verfahren die folgenden Schritte aufweist:
Umschließen eines Einsatzes (1) mit Hilfe von zumindest zwei Werkzeughälften (41, 42), so dass zumindest ein Hohlraum (44) gebildet wird, wobei durch das Umschließen der Umfang eines Spreizelements (30) am Einsatz (1) vergrößert und geschlossen wird;
Injizieren einer Formmasse in den zumindest einen Hohlraum (44);
Aushärten der Formmasse, so dass ein Formbauteil (50) gebildet wird; und
Öffnen der Werkzeughälften (41, 42), wobei sich der Umfang des Spreizelements (30) am Einsatz (1) auf seine Größe im Grundzustand verkleinert.

13. Verfahren nach Anspruch 12, bei dem das Verfahren ein Spritzguss- oder Druckgussverfahren umfasst.

14. Verfahren nach Anspruch 12 oder 13, bei dem der Schritt des Umschließens die folgenden Schritte umfasst:
in Kontakt bringen zumindest einer Werkzeughälfte (41, 41a) mit einer ersten Komponente (10) des Einsatzes (1), wobei das Spreizelement (30) mit der ersten Komponente (10) gegenüber einer zweiten Komponente (20) bewegbar ist;
auf einander zu bewegen, beim weiteren Umschließen des Einsatzes (1), der ersten Komponente (10) mit dem Spreizelement (30) und der zweiten Komponente (20);
Einführen, beim weiteren Umschließen des Einsatzes (1), eines Vorsprungs (22) an der zweiten Komponente (20) in eine Öffnung (32) am Spreizelement (30), so dass sich der Umfang des Spreizelements (30) vergrößert und die Öffnung (32) durch den Vorsprung (22) geschlossen wird.

15. Verfahren nach Anspruch 14, bei dem im Schritt des auf einander zu Bewegens die zweite Komponente (20) gegen eine Vorspannkraft in Richtung der ersten Komponente (10) bewegt wird, und die Vorspannkraft im Schritt des Öffnens der Werkzeughälften (41, 42) die erste Komponente (10) von der zweiten Komponente (20) wegdrückt.

## Claims

1. Insert (1) for a tool (40) for producing moulded parts (50) with an undercut (52), having:
a first component (10);
a second component (20) which is arranged spaced apart from the first component (10) and which has a projection (22) which extends in the direction of the first component (10);
a spreading element (30) which is arranged between the first and second component (10, 20) and which is preferably movable with the first component (10); and
an opening (32) in the spreading element (30), which the projection (22) of the second component (20) can enter, wherein the outer periphery of the spreading element (30) is enlarged and the opening (32) is closed by the projection (22).

2. Insert according to Claim 1, in which the first and/or second component (10, 20) have/has a maximum outer diameter which is less than 15 mm, preferably less than 12 mm, even more preferably less than 10 mm.

3. Insert according to Claim 1 or 2, in which the spreading element (30) is held between two radial projections (12, 13) of the first component (10).

4. Insert according to one of Claims 1-3, in which the first and/or second component (10, 20) have/has the shape of a cylinder.

5. Insert according to one of Claims 1-4, in which the projection (22) has the shape of a wedge which narrows away from the second component (20).

6. Insert according to one of Claims 1-5, in which the spreading element (30) comprises a spreading ring.

7. Insert according to one of Claims 1-6, in which the opening (32) has a shape which is complementary in relation to the projection (22), so that the opening (32) is closed with the projection (22) introduced.

8. Insert according to one of Claims 1-7, in which the volume of the projection (22) is larger than the volume of the opening (32) in the basic state.

9. Insert according to one of Claims 1-8, in which the spreading element (30) is held loosely in its orientation with respect to the first component (10) by holding means.

10. Tool (40) for producing moulded parts (50) with an undercut (52), having:
at least two tool halves (41, 42); and
an insert (1) according to one of Claims 1-9; wherein
the at least two tool halves (41, 42) enclose the insert (1) in the closed state and form at least one cavity (44) such that a moulded part (50) with at least one undercut (52) can be formed.

11. Installation for producing moulded parts (50) with an undercut (52), having:
at least one tool (40) according to Claim 10; and
at least one nozzle which is configured to introduce molten moulding compound, preferably under pressure, into cavities (44) in the tool (40).

12. Method for producing moulded parts (50) with an undercut (52), preferably using a tool (40) according to Claim 10 and/or an installation according to Claim 11, wherein the method comprises the following steps:
enclosing an insert (1) with the aid of at least two tool halves (41, 42) such that at least one cavity (44) is formed, wherein the enclosing causes the periphery of a spreading element (30) on the insert (1) to be enlarged and closed;
injecting a moulding compound into the at least one cavity (44);
curing the moulding compound so that a moulded part (50) is formed; and
opening the tool halves (41, 42), wherein the periphery of the spreading element (30) on the insert (1) is reduced to its size in the basic state.

13. Method according to Claim 12, in which the method comprises an injecting-moulding process or diecasting process.

14. Method according to Claim 12 or 13, in which the step of enclosing comprises the following steps:
bringing at least one tool half (41, 41a) into contact with a first component (10) of the insert (1), wherein the spreading element (30) is movable with the first component (10) relative to a second component (20);
moving, during further enclosing of the insert (1), the first component (10) with the spreading element (30) and the second component (20) towards one another;
introducing, during further enclosing of the insert (1), a projection (22) on the second component (20) into an opening (32) in the spreading element (30) such that the periphery of the spreading element (30) is enlarged and the opening (32) is closed by the projection (22).

15. Method according to Claim 14, in which, in the step of moving towards one another, the second component (20) is moved in the direction of the first component (10) counter to a preload force, and, in the step of opening the tool halves (41, 42), the preload force pushes the first component (10) away from the second component (20).

## Revendications

1. Insert (1) pour un outil (40) pour la fabrication de pièces moulées (50) à contre-dépouille (52), présentant :
un premier composant (10) ;
un deuxième composant (20), qui est espacé du premier composant (10) et qui présente une saillie (22) s'étendant en direction du premier composant (10) ;
un élément d'écartement (30), qui est agencé entre le premier et le deuxième composant (10, 20) et qui est de préférence mobile avec le premier composant (10) ; et
une ouverture (32) sur l'élément d'écartement (30) dans laquelle la saillie (22) du deuxième composant (20) peut pénétrer, la périphérie extérieure de l'élément d'écartement (30) étant agrandie et l'ouverture (32) étant fermée par la saillie (22).

2. Insert selon la revendication 1, dans lequel le premier et/ou le deuxième composant (10, 20) présentent un diamètre extérieur maximal qui est inférieur à 15 mm, de préférence inférieur à 12 mm, de préférence encore inférieur à 10 mm.

3. Insert selon la revendication 1 ou 2, dans lequel l'élément d'écartement (30) est maintenu entre deux saillies radiales (12, 13) du premier composant (10).

4. Insert selon l'une quelconque des revendications 1 à 3, dans lequel le premier et/ou le deuxième composant (10, 20) présentent une forme cylindrique.

5. Insert selon l'une quelconque des revendications 1 à 4, dans lequel la saillie (22) présente une forme de coin qui s'amincit en s'éloignant du deuxième composant (20) .

6. Insert selon l'une quelconque des revendications 1 à 5, dans lequel l'élément d'écartement (30) comprend une bague d'écartement.

7. Insert selon l'une quelconque des revendications 1 à 6, dans lequel l'ouverture (32) présente une forme complémentaire à la saillie (22), de telle sorte que l'ouverture (32) est fermée avec la saillie (22) insérée.

8. Insert selon l'une quelconque des revendications 1 à 7, dans lequel le volume de la saillie (22) est plus grand que le volume de l'ouverture (32) à l'état de base.

9. Insert selon l'une quelconque des revendications 1 à 8, dans lequel l'élément d'écartement (30) est maintenu libre dans son orientation par rapport au premier composant (10) par des moyens de maintien.

10. Outil (40) pour la fabrication de pièces moulées (50) à contre-dépouille (52), présentant :
au moins deux moitiés d'outil (41, 42) ; et
un insert (1) selon l'une quelconque des revendications 1 à 9 ;
les au moins deux moitiés d'outil (41, 42) entourant l'insert (1) à l'état fermé, et formant au moins une cavité (44), de telle sorte qu'une pièce moulée (50) avec au moins une contre-dépouille (52) peut être formée.

11. Installation pour la fabrication de pièces moulées (50) à contre-dépouille (52), présentant :
au moins un outil (40) selon la revendication 10 ; et
au moins une buse qui est adaptée pour introduire de la masse de moulage fondue, de préférence sous pression, dans des cavités (44) dans l'outil (40).

12. Procédé de fabrication de pièces moulées (50) à contre-dépouille (52), de préférence avec un outil (40) selon la revendication 10 et/ou une installation selon la revendication 11, le procédé présentant les étapes suivantes :
l'entourage d'un insert (1) à l'aide d'au moins deux moitiés d'outil (41, 42), de telle sorte qu'au moins une cavité (44) est formée, la périphérie d'un élément d'écartement (30) sur l'insert (1) étant agrandie et fermée par l'entourage ;
l'injection d'une masse de moulage dans l'au moins une cavité (44) ;
le durcissement de la masse de moulage de telle sorte qu'une pièce moulée (50) est formée ; et
l'ouverture des moitiés d'outil (41, 42), la périphérie de l'élément d'écartement (30) sur l'insert (1) se réduisant à sa taille à l'état de base.

13. Procédé selon la revendication 12, dans lequel le procédé comprend un procédé de moulage par injection ou de moulage sous pression.

14. Procédé selon la revendication 12 ou 13, dans lequel l'étape d'entourage comprend les étapes suivantes :
la mise en contact d'au moins une moitié d'outil (41, 41a) avec un premier composant (10) de l'insert (1), l'élément d'écartement (30) étant mobile avec le premier composant (10) par rapport à un deuxième composant (20) ; le rapprochement, tout en continuant à entourer l'insert (1), du premier composant (10) avec l'élément d'écartement (30) et du deuxième composant (20) ;
l'insertion, tout en continuant à entourer l'insert (1), d'une saillie (22) sur le deuxième composant (20) dans une ouverture (32) sur l'élément d'écartement (30), de telle sorte que la périphérie de l'élément d'écartement (30) est agrandie et l'ouverture (32) est fermée par la saillie (22).

15. Procédé selon la revendication 14, dans lequel, dans l'étape de rapprochement, le deuxième composant (20) est déplacé en direction du premier composant (10) à l'encontre d'une force de précontrainte, et dans l'étape d'ouverture des moitiés d'outil (41, 42), la force de précontrainte pousse le premier composant (10) à l'écart du deuxième composant (20).
